# EUROPEAN PATENT SPECIFICATION

(11) **EP 1 574 887 B1**
(45) Date of publication and mention of the grant of the patent: **23.02.2011**
(21) Application number: 03782849.8
(22) Date of filing: 19.12.2003
(51) Int. Cl.: G02B 6/42

(54) **OPTICAL DEVICE**
Optische Vorrichtung
DISPOSITIF OPTIQUE

(30) Priority: 20.12.2002 JP 2002370751; 20.01.2003 JP 2003011560; 02.06.2003 JP 2003157201
(43) Date of publication of application: 14.09.2005
(73) Proprietor: NGK Insulators, Ltd., Nagoya-City, Aichi Pref. 467-8530 (JP)
(72) Inventor: FUKUYAMA, Masashi, Inuyama-city, Aichi-Pref. 484-0944 (JP); IWASAKI, Yasunori, c/o NGK INSULATORS, LTD., Nagoya-shi, Aichi 467-8530 (JP); IDE, Akiyoshi, c/o NGK INSULATORS, LTD., Nagoya-shi, Aichi 467-8530 (JP)
(74) Representative: Paget, Hugh Charles Edward
(86) International application number: PCT/JP2003/016349
(87) International publication number: WO 2004/057397

(56) References cited:
- EP-A- 0 908 746
- EP-A1- 0 844 503
- JP-A- 5 203 830
- JP-A- 7 294 742
- JP-A- 9 021 912
- JP-A- 9 061 664
- JP-A- 9 105 824
- JP-A- 10 307 221
- PATENT ABSTRACTS OF JAPAN vol. 1997, no. 05, 30 May 1997 (1997-05-30) & JP 09 021912 A (FURUKAWA ELECTRIC CO LTD:THE), 21 January 1997 (1997-01-21)
- PATENT ABSTRACTS OF JAPAN vol. 1997, no. 08, 29 August 1997 (1997-08-29) & JP 09 105824 A (NIPPON TELEGR & TELEPH CORP <NTT>), 22 April 1997 (1997-04-22)
- PATENT ABSTRACTS OF JAPAN vol. 1996, no. 03, 29 March 1996 (1996-03-29) & JP 07 294742 A (HONDA TSUSHIN KOGYO KK; others: 01), 10 November 1995 (1995-11-10)

## Description

### TECHNICAL FIELD:

The present invention relates to an optical fiber array having one or more optical fibers or an optical device having one or more optical waveguides, and more particularly to an optical device suitable for monitoring signal light while it is being propagated through such optical transmitting means.

### BACKGROUND ART:

For the present optical communication technology, it is important to monitor communication quality. Particularly, the monitoring of optical output plays an important role in the field of the wavelength multiplex communication technology.

In recent years, there have been growing demands for smaller sizes, higher performance, and lower costs in the optical output monitoring technology.

Heretofore, there has been proposed a technology disclosed in Japanese Laid-Open Patent Publication No. 2001-264594, for example. According to the proposed technology, as shown in FIG. 11, an optical fiber 202 is placed in a V-shaped groove in a glass substrate 200, and then a slit 204 is formed obliquely (to the optical axis) in and across the optical fiber 202. A light reflecting base (filter member) 206 is inserted into the slit 204, with the gap filled with an ultraviolet-curable resin (adhesive) 208. The filter member 206 has a substrate 210 and a multilayer film 212 formed on the principal surface of the substrate 210. The multilayer film 212 is designed to match the refractive index of the substrate 210 and the refractive index of the resin 208 that fills the slit 204.

Of signal light 214 propagated through the optical fiber 202, a light component (reflected light) 216 reflected by the filter member 206 is extracted out of the cladding. The reflected light 216 is detected by a photodetector to monitor the signal light 214.

Heretofore, the slit 204 comprises a parallel groove. An inner wall surface of the slit 204, a principal surface of the filter member 206 (a surface facing the multilayer film 212), surfaces of the substrate 210 of the filter member 206, and another wall surface of the slit 204 lie parallel to each other.

Since the refractive index of the optical fiber 202 and the refractive index of the resin 208 are different from each other, and the refractive index of the substrate 210 of the filter member 206 and the refractive index of the resin 208 are different from each other, reflected lights 226, 228, 230 occur from a first interface 220 between the slit 204 and the resin 208, an interface 222 between the substrate 210 of the filter member 206 and the resin 208, and a second interface 224 between the slit 204 and the resin 208, respectively.

Generally, because the resin 208 which fills the slit 204 also has a function to match refractive indexes, the difference between the refractive indexes of the optical fiber 202 and the resin 208 is small. Therefore, the output of the reflected lights 226, 228, 230 due to the small refractive index difference is several tens dB smaller than the input light (the signal light 214). However, since light is of a wave nature, it causes interference.

Though the reflected lights 226, 228, 230 due to the refractive index difference are of small power, they affect the characteristics of the reflected light 216 because they are emitted in directions which are substantially the same as the direction in which the reflected light 216 from the multilayer film 212 of the filter member 206 is emitted. Furthermore, the arrangement for dividing light with the filter member 206 that is inserted in the slit 204 formed obliquely to the optical axis is problematic in that the characteristics of the reflected light 216 from the filter member 206 tend to interfere with the reflected lights 226, 228, 230 from the first and second interfaces 220, 224, etc.

JP-A-9-21912 shows in its Fig. 7 constructions in which a multilayered dielectric film filter is inserted into a groove intersecting an optical waveguide. A resin fills a gap between the surfaces of the groove and the filter member. The filter member has a substrate and multilayered dielectric films disposed on a surface of the substrate. In some constructions shown, the surfaces of the groove are not parallel to the surfaces of the filter member.

EP-A-908746 illustrates a construction in which a wavelength selecting filter is inserted in a groove extending across a waveguide. The filter has a substrate and a dielectric multilayered film structure on the substrate. A wedge is also driven into the insertion groove, to press the filter against a vertical wall surface defining the groove. The other surface of the groove is not parallel to the surface of the filter.

### DISCLOSURE OF THE INVENTION:

The present invention has been made in view of the above problems. It is an object of the present invention to provide an optical device which is capable of reducing interference of reflected light from a multilayer surface of a filter member with light reflected by other portions thereof and of improving the reliability of a monitoring function to monitor signal light.

According to the present invention, there is provided an optical device as set out in claim 1.

Light reflected (divided) by a surface not parallel to the first surface of the filter member, among the first inner wall surface of the slit, the second inner wall surface of the slit, and the second surface of the filter member, is emitted in a direction which is different from the direction in which light reflected (divided) by the first surface of the filter member is emitted. Therefore, the interference of the reflected light from the first surface is reduced. The reduced interference leads to an improvement in the reliability of a monitoring function to monitor the signal light.

The optical thin film on the principal surface of the filter member may be of a single layer, but is often an optical thin film optimally designed as a multilayer film. The principal surface of the filter member may be disposed not only on a light entrance side, but also on a light exit side.

The angle formed between the two surfaces which do not lie parallel to each other should preferably be 0.5° or greater. If the angle is less than 0.5°, the interference of the reflected light from the first surface cannot be preferably reduced.

The optical device is preferably as set out in claim 3.

In this case, preferably the first line segment and the second line segment do not lie parallel to each other.

Alternatively, the first line segment and the second line segment do lie parallel to each other.

With the above arrangement, at least the filter member may have a bottom surface partly held in contact with a bottom of the slit. The filter member can be kept at a desired angle simply by holding a portion of the bottom surface of the filter member in contact with the bottom of the slit, and the optical device can easily be assembled.

As described above, the optical device according to the present invention is capable of reducing the interference of the reflected light from the multilayer surface of the filter member with the other reflected light, and improving the reliability of the monitoring function to monitor the signal light.

### BRIEF DESCRIPTION OF THE DRAWINGS:

FIG. 1 is a sectional front elevational view of an optical device according to a first embodiment;
FIG. 2 is a sectional side elevational view of the optical device according to the first embodiment;
FIG. 3 is an enlarged fragmentary cross-sectional view of the optical device according to the first embodiment;
FIG. 4 is an enlarged fragmentary cross-sectional view of a first modification of the optical device according to the first embodiment;
FIG. 5 is an enlarged fragmentary cross-sectional view of a second modification of the optical device according to the first embodiment;
FIG. 6 is an enlarged fragmentary cross-sectional view of a third modification of the optical device according to the first embodiment;
FIG. 7 is an enlarged fragmentary cross-sectional view of a fourth modification of the optical device according to the first embodiment;
FIG. 8 is an enlarged fragmentary cross-sectional view of a fifth modification of the optical device according to the first embodiment;
FIG. 9 is an enlarged fragmentary cross-sectional view of a sixth modification of the optical device according to the first embodiment;
FIG. 10 is an enlarged fragmentary cross-sectional view of a seventh modification of the optical device according to the first embodiment; and

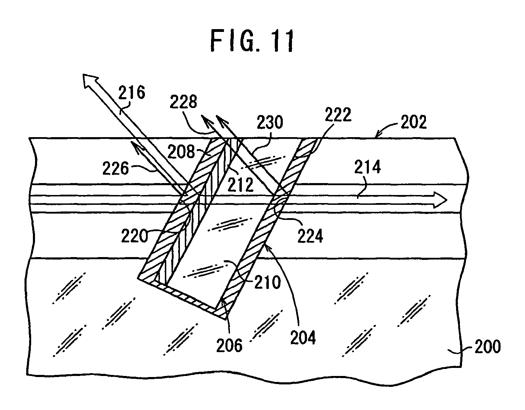

FIG. 11 is an enlarged fragmentary fifth cross-sectional view of a conventional optical device.

### BEST MODE FOR CARRYING OUT THE INVENTION:

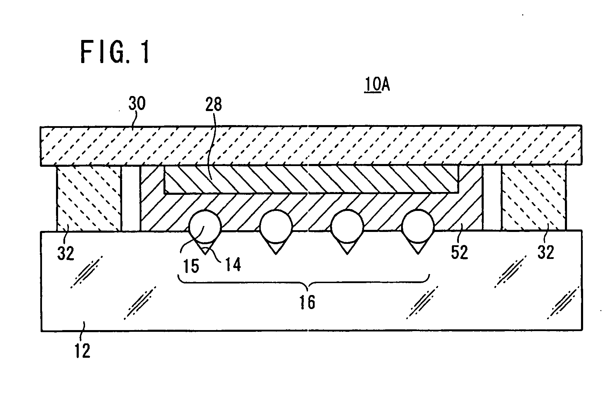

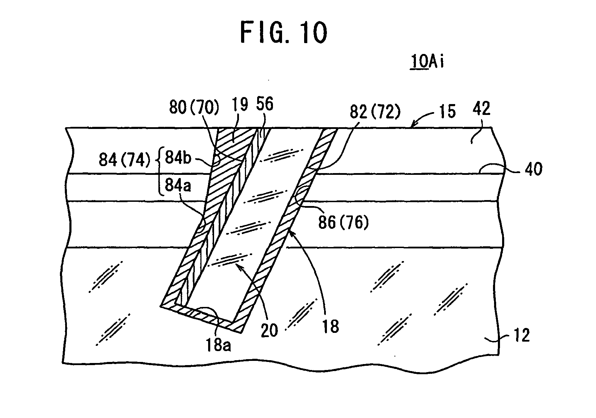

Embodiments in which an optical device according to the present invention is applied to a 4-ch in-line power monitor module, for example, will be described below with reference to FIGS. 1 through 10.

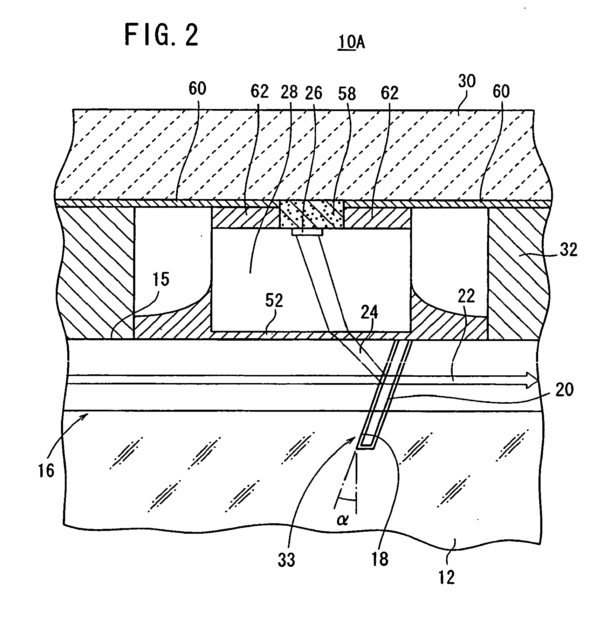

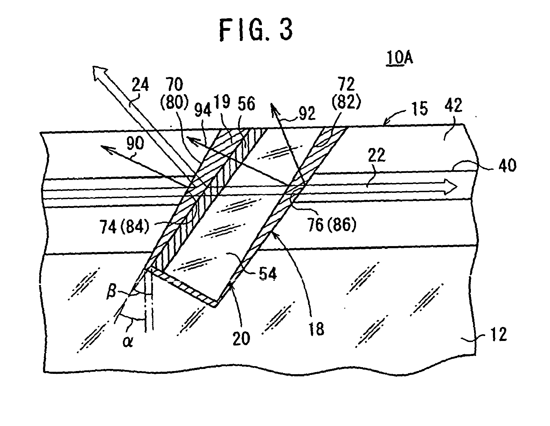

As shown in FIGS. 1 and 2, an optical device 10A according to a first embodiment has a glass substrate 12, an optical fiber array 16 comprising a plurality of optical fibers 15 fixed in a plurality of V-shaped grooves 14 defined in the glass substrate 12, a slit 18 (see FIG. 2) extending from respective upper surfaces of the optical fibers 15 into the glass substrate 12, a dividing member (filter member) 20 (see FIG. 2) inserted in the slit 18, a PD (PhotoDiode) array 28 having a plurality of active layers 26 for detecting light (reflected light) 24 reflected by at least the filter member 20, of signal light 22 passing through the optical fibers 15, a submount 30 fixing the PD array 28 so as to face the optical fiber array 16, and a spacer 32 for stably fixing at least the PD array 28. Two end faces of the slit 18 and face and reverse sides of the filter member 20 function as a divider 33 (see FIG. 2) for dividing part of signal light 22 that passes through the optical fibers 15. As shown in FIG. 3, each of the optical fibers 15 has a core 40 and a cladding 42.

Stated otherwise, the optical device 10A according to the first embodiment has the glass substrate 12 with the V-shaped grooves 14 defined therein, the optical fiber array 16 fixed in the V-shaped grooves in the glass substrate 12 and providing a light dividing function (the slit 18, the filter member 20, etc.) to each of the optical fibers 15, the PD array 28 securely mounted by an adhesive layer 52 on an optical path of divided light 24 generated by at least the light dividing function, outside of the cladding of each of the optical fibers 15, and the submount 30 on which the PD array 28 is mounted. The submount 30 is disposed such that the mounting surface of the submount 30 faces the glass substrate 12.

In this embodiment, the optical fiber array 16 comprises a plurality of optical fibers 15, and "each of the optical fibers 15" means "each of the four optical fibers 15". However, since even one optical fiber 15 can make up the optical fiber array 16, "each of the optical fibers" or "a plurality of optical fibers" may read as "a single optical fiber".

The angle of the V-shaped grooves 14 defined in the glass substrate 12 should preferably be 45° or greater in view of the load which will be applied to each of the optical fibers 15 of the optical fiber array 16 when the slits 18 will subsequently be formed. The angle should also preferably be 95° or less to provide a sufficient amount of adhesive (= bonding strength) in order to produce a lid-free optical fiber array. In the first embodiment, the angle is 70°.

The optical fiber array 16 is fixed to the glass substrate 12 by placing the optical fiber array 16 in the V-shaped grooves 14, applying an ultraviolet-curable adhesive, and then applying an ultraviolet radiation from the reverse side of the optical fiber array 16 and from above the optical fiber array 16 to cure the adhesive.

The tilt angle α (see FIG. 2) of the slit 18, i.e., the angle between the slit 18 and the vertical plane, should preferably range from 15° to 25°. If the tilt angle α is too small, then the divided light 24 from the filter member 20 spreads too widely, resulting in increased crosstalk when the optical device is used in multichannel applications. If the tilt angle α is too large, then divided light 24 from the filter member 20 has increased polarization dependency, tending to result in degraded characteristics.

As shown in FIG. 3, the filter member 20 comprises a quartz substrate 54 and a dividing multilayer film 56 disposed on a principal surface of the quartz substrate 54. In view of the ease with which to handle the filter member 20, the filter member 20 may be made of a plastic material, a high-polymer material, or a polyimide material. However, since the tilt angle α of the slit 18 is large, i.e., it is in the range from 15° to 25°, the filter member 20 should preferably be made of a material having the same refractive index as the optical fibers 15 (quartz) in order to prevent the optical axis of transmitted light from being displaced due to refraction.

The gap between the slit 18 and the filter member 20 within the slit 18 is filled with an ultraviolet-curable resin (adhesive) 19. The resin 19 comprises a silicone-based resin such that its refractive index is essentially the same as the refractive index of the cores 40 of the optical fibers 15 and the refractive index of the quartz substrate 54 of the filter member 20.

As shown in FIG. 2, the PD array 28 is of a structure for detecting light applied to its reverse side. An anisotropic conductive paste 58, rather than an Au solder or electrode or a silver paste, is disposed on an upper surface of the active layer 26 (which faces the submount 30). From the standpoint of crosstalk, the region on the upper surface of the active layer 26 should preferably be of a material having low reflectance, such as the anisotropic conductive paste 58, air, or the like, rather than a material having high reflectance, such as Au or the like. The PD array 28 may be a PD array for detecting light applied to its face side.

The photodetector area (active layer 26) of the PD array 28 for detecting light applied to its reverse side has a diameter of about 60 µm. The diameter of the photodetector area (active layer 26) should preferably be in the range from 40 to 80 µm. If the diameter is smaller than 40 µm, then since the size of the photodetector area (active layer 26) is too small, the efficiency with which the PD array 28 detects light is lowered. If the diameter is equal to or greater than 80 µm, then the PD array 28 tends to detect stray light, resulting in increased crosstalk.

The submount 30 is mounted in a structure in which the optical fiber 15, the PD array 28, and the submount 30 are arranged successively. If the submount 30 is mounted in a structure in which the optical fiber 15, the submount 30, and the PD array 28 are arranged successively, then since the submount 30 is present between the optical fiber 15 and the PD array 28, the length of the optical path of the divided light 24 is increased, and the divided light 24 is spread greatly, posing disadvantages with respect to the efficiency with which the PD array 28 detects light and crosstalk. The submount 30 is made of Al₂O₃.

The PD array 28 for detecting light applied to its reverse side has anode and cathode electrodes disposed on its active layer 26 side (facing the submount 30). A common cathode electrode and anode electrodes of respective channels are patterned as an electrode pattern 60 of gold on the submount 30. Bumps 62 of gold are disposed in areas corresponding to the anode electrodes of respective channels and the cathode electrode, and the region on the active layer 26 is filled with the anisotropic conductive paste 58. The bumps 62 of gold serve the purpose of achieving reliable conduction and also the purpose of increasing the interelectrode distance between the active layer 26 and the submount 30 to reduce stray light due to reflection and scattering in the areas. When heat is applied to the anisotropic conductive paste 58, a conductive material such as silver or the like in the anisotropic conductive paste 58 is attracted to the conductive areas such as the bumps 62 of gold, thereby providing conductivity between the anisotropic conductive paste 58 and the electrode pattern 60 of gold.

The area of the lower surface of the submount 30, which corresponds to the active layer 26, is coated with SiN (not shown) for reducing reflection due to the refractive index difference.

The spacer 32 for determining the gap between the optical fiber array 16 and the PD array 28 is fixed to the mounting surface of the submount 30 by an ultraviolet-curable adhesive, for example.

As shown in FIG. 3, in the optical device 10A according to the first embodiment the surface of the filter member 20 on the multilayer film 56 is defined as a first surface 70, the surface of the filter member 20 on the quartz substrate 54 as a second surface 72, the inner wall surface of the slit 18 which faces the first surface 70 of the filter member 20 as a first inner wall surface 74, and the inner wall surface of the slit 18 which faces the second surface 72 of the filter member 20 as a second inner wall surface 76. One or more of the first inner wall surface 74, the second inner wall surface 76, and the second surface 72 of the filter member 20 do not lie parallel to the first surface 70 of the filter member 20. "Two surfaces which do not lie parallel to each other" means that "the angle between the two surfaces is 0.5° or greater".

Specifically, according to the first embodiment, a line segment which is formed when the first surface 70 of the filter member 20 and a vertical plane including the optical axis of the signal light 22 cross each other is defined as a first line segment 80, a line segment which is formed when the second surface 72 of the filter member 20 and the vertical plane cross each other as a second line segment 82, a line segment which is formed when the first inner wall surface 74 of the slit 18 and the vertical plane cross each other as a third line segment 84, and a line segment which is formed when the second inner wall surface 76 of the slit 18 and the vertical plane cross each other as a fourth line segment 86. The first line segment 80 and the second line segment 82 do not lie parallel to each other, the third line segment 84 and the fourth line segment 86 do not lie parallel to each other, and the first line segment 80 and the third line segment 84 do not lie parallel to each other. The tilt angle α of the slit 18 and the tilt angle β of the first line segment 80 (the angle formed between the first line segment 80 and the vertical line) are related as α < β. The PD array 28 (see FIG. 2) is disposed on the optical path of the light 24 reflected from the surface (the first surface 70) of the multilayer film 56 of the filter member 20.

Light 90 reflected by the first inner wall surface 74 of the slit 18 (the interface between the first inner wall surface 74 of the slit 18 and the resin 19), light 92 reflected by the second inner wall surface 76 of the slit 18 (the interface between the second inner wall surface 76 of the slit 18 and the resin 19), and light 94 reflected by the second surface 72 of the filter member 20 (the interface between the quartz substrate 54 and the resin 19) are emitted in respective directions which are different from the direction in which the light 24 reflected by the first surface 70 of the filter member 20 (the interface between the multilayer film 56 of the filter member 20 and the resin 19) is emitted. Therefore, the interference of the reflected light (divide light) 24 with the other reflected lights 90, 92, 94 is reduced. The reduced interference leads to an improvement in the reliability of the monitoring function to monitor the signal light 22.

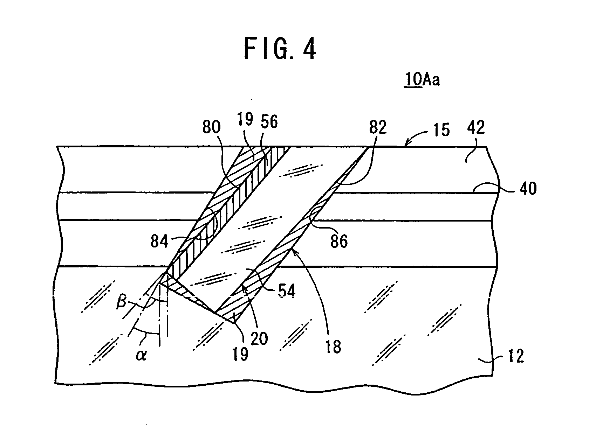

Some modifications of the optical device 10A according to the first embodiment will be described below with reference to FIGS. 4 through 10.

As shown in FIG. 4, an optical device 10Aa according to a first modification is of substantially the same structure as the optical device 10A according to the first embodiment, but differs therefrom in that the first line segment 80 of the filter member 20 and the second line segment 82 of the filter member 20 lie parallel to each other, the third line segment 84 of the slit 18 and the fourth line segment 86 of the slit 18 lie parallel to each other, and the first line segment 80 of the filter member 20 and the third line segment 84 of the slit 18 do not lie parallel to each other.

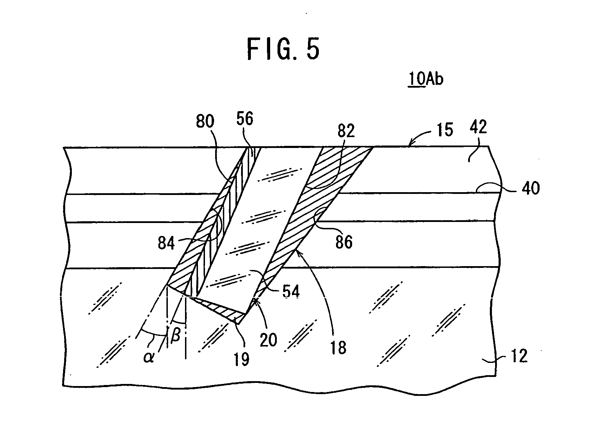

As shown in FIG. 5, an optical device 10Ab according to a second modification is of substantially the same structure as the optical device 10Aa according to the first modification, but differs therefrom in that the tilt angle α of the slit 18 and the tilt angle β of the first line segment 80 are related as α > β.

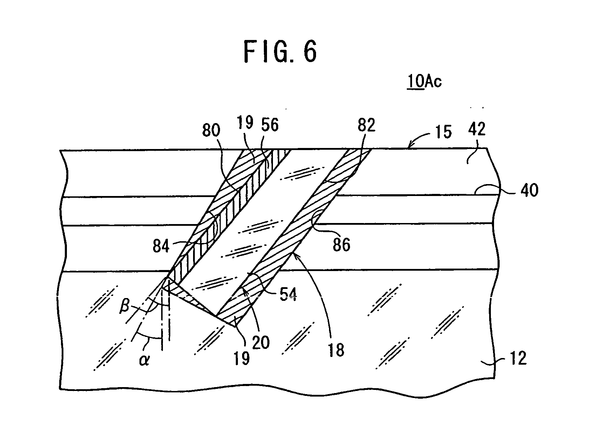

As shown in FIG. 6, an optical device 10Ac according to a third modification is of substantially the same structure as the optical device 10Aa according to the first modification, but differs therefrom in that the first line segment 80 of the filter member 20 and the second line segment 82 of the filter member 20 do not lie parallel to each other.

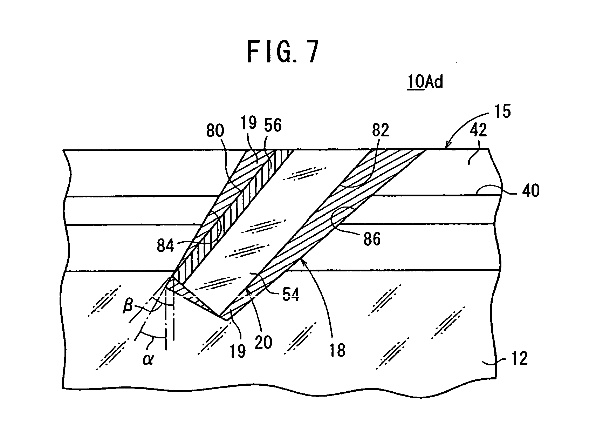

As shown in FIG. 7, an optical device 10Ad according to a fourth modification is of substantially the same structure as the optical device 10Aa according to the first modification, but differs therefrom in that the third line segment 84 of the slit 18 and the fourth line segment 86 of the slit 18 do not lie parallel to each other.

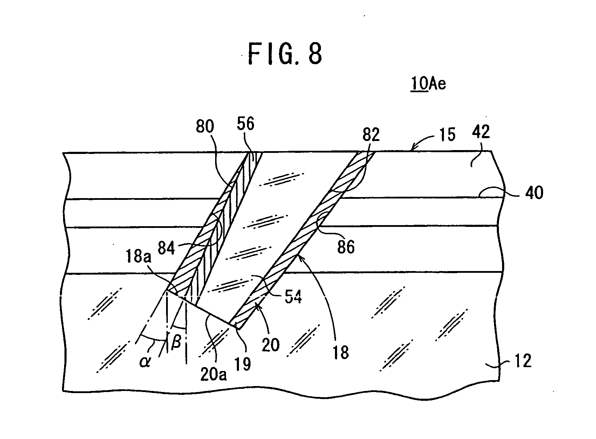

As shown in FIG. 8, an optical device 10Ae according to a fifth modification is of substantially the same structure as the optical device 10Ac according to the third modification, but differs therefrom as follows:

The tilt angle α of the slit 18 and the tilt angle β of the first line segment 80 are related as α > β. The filter member 20 has a bottom surface 20a held in contact with a bottom 18a of the slit 18. Since the filter member 20 can be kept at a desired angle β simply by holding the bottom surface 20a of the filter member 20 in contact with the bottom 18a of the slit 18, the optical device 10Ae can easily be assembled.

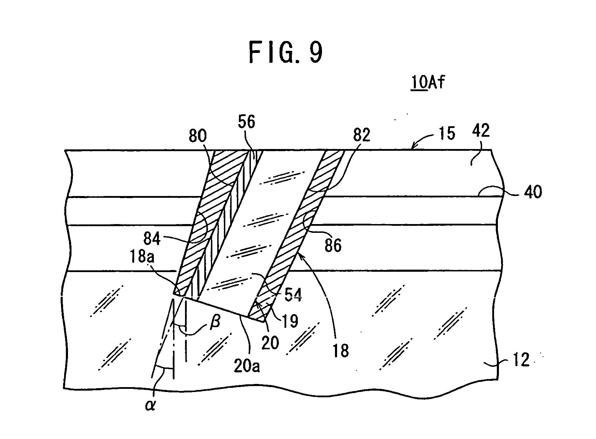

As shown in FIG. 9, an optical device 10Af according to a sixth modification is of substantially the same structure as the optical device 10Ae according to the fifth modification, but differs therefrom in that the first line segment 80 and the second line segment 82 of the filter member 20 and the fourth line segment 86 of the slit 18 lie parallel to each other, and the bottom surface 20a of the filter member 20 is held in contact with the bottom 18a of the slit 18.

The optical devices 10A according to the first embodiment and the modifications thereof described are applied to the optical fiber array 16 comprising the plural optical fibers 15. The optical devices 10A according to these embodiments are also applicable to an optical waveguide array having a plurality of optical waveguides formed in an LN substrate, for example.

An inventive example of the optical device 10A of the first embodiment will be described below. First, a glass substrate 12 for use in an in-line optical fiber array 16 was fabricated by a grinding process.

The glass substrate 12 was made of borosilicate glass (particularly, Pyrex (registered trademark) glass material was used). The glass substrate 12 had a size represented by a length of 16 mm and a thickness of 1 mm. 12 V-shaped grooves 14 for holding the optical fiber array 16 were formed at a pitch of 250 µm to a depth of about 90 µm by a grinding process.

Then, the optical fiber array 16 was assembled. The optical fiber array 16 comprised a 12-core ribbon fiber assembly having a pitch of 250 µm. The tape was peeled off from the 12-core ribbon fiber assembly to provide a peeled region having a length of 12 mm, and the optical fibers were placed in the V-shaped groove 14 in the glass substrate 12 and fixed in place by an ultraviolet-curable resin adhesive.

Then, the slit 18 was formed in and across the optical fiber array 16. The slit 18 had a width of 30 µm, a depth of 200 µm, and a tilt angle α of 20°.

Then, the filter member 20 was fabricated. The multilayer film 56 made of a selected one of tantalum oxide, quartz, alumina, titanium oxide, etc. was formed on the quartz substrate 54 by evaporation, and the quartz substrate 54 with the multilayer film 56 formed thereon was machined into a size having a thickness of 20 µm, a length of 5 mm, and a width of 200 µm, thereby fabricating the filter member 20. The filter member 20 had a designed tilt angle of 20°, a division ratio represented by a transmittance of 93 % and a reflectance of 7 % .

Thereafter, the filter member 20 was inserted into the slit 18, and adjusted on a positioning stage such that the first surface 70 of the filter member 20 had a tilt angle β ranging from 20.5° to 21° with respect to the optical axis. With the filter member 20 fixed at the tilt angle β, the slit 18 was filled with the resin 19. The resin 19 was a silicone-based resin such that its refractive index is essentially the same as the refractive index of the cores 40 of the optical fibers 15. After the slit 18 was filled with the resin 19, the resin 19 was cured.

Thereafter, the PD array 28 was mounted on the submount 30. The PD array 28 had 12 channels, and had a height of 150 µm, a width of 420 µm, and a length of 3 mm.

The PD array 28 had a structure for detecting light applied to its reverse side, as with the optical device 10A according to the first embodiment. The area above the active layer 26 (which faces the submount 30) was filled with the anisotropic conductive paste 58.

Then, the PD array 28 was centrally aligned. Specifically, the spacer 32 for determining the gap between the optical fiber array 16 and the PD array 28 was installed on the submount 30.

The spacer 32 was made of borosilicate glass, particularly Pyrex (registered trademark) glass material. The gap length was set to 10 µm. Since the thickness of the PD array 28 including the bumps 62 of gold was 190 µm, the spacer 32 had a thickness of 200 µm.

While centrally aligning the PD array 28 in order to position the active layer 26 of the PD array 28 on the optical path of the reflected light 24 from the first surface 70 of the filter member 20, the submount 30 was mounted on the optical fiber array 16 with the spacer 32 interposed therebetween.

The optical device according to the inventive example was evaluated for measurements. The effect that the reflected light has due to the difference between refractive indexes manifests itself owing to characteristic changes in the light detection efficiency of the PD array 28 based on temperature changes and characteristic changes in the light detection efficiency of the PD array 28 after a high-temperature, high-humidity test. The inventive example and a comparative example were evaluated with respect to the above two points.

The comparative example had such a structure that the difference between the tilt angle α of the slit 18 and the tilt angle β of the first surface 70 of the filter member 20 was set to less than 0.5.

According to the comparative example, changes in the light detection efficiency due to temperature changes were about 0.5 dB, and changes in the light detection efficiency after a high-temperature, high-humidity test were also about 0.5 dB.

With the optical device according to the inventive example, both changes in the light detection efficiency due to temperature changes and changes in the light detection efficiency after a high-temperature, high-humidity test were about 0.1 dB, and hence almost no characteristic changes were observed.

## Claims

1. An optical device comprising:
light transmitting means (15);
a slit (18) defined in said light transmitting means (15);
a filter member (20) inserted in said slit (18) for dividing a portion of signal light (22) propagated through said light transmitting means (15); and
a resin (19) filling a gap between said slit (18) and said filter member (20) within said slit (18);
said filter member (20) having a substrate (54) and an optical thin film (56) disposed on a principal surface of said substrate (54);
wherein when a surface of said filter member (20) on said optical thin film (56) is defined as a first surface (70), a surface of said filter member (20) on said substrate (54) is defined as a second surface (72), an inner wall surface of said slit (18) which faces said first surface (70) of said filter member (20) is defined as a first inner wall surface (74), and an inner wall surface of said slit (18) which faces said second surface (76) of said filter member (20) is defined as a second inner wall surface (76);
said first inner wall surface (74) and said second inner wall surface (76) of said slit (18) incline in the same direction relative to a plane that is perpendicular to the optical axis of the signal light entering the filter, and do not lie parallel to each other; and at least said first inner wall surface of said slit does not lie parallel to said first surface (70) of said filter member (20).

2. An optical device according to claim 1, wherein an angle formed between said two surfaces which do not lie parallel to each other is 0.5° or greater.

3. An optical device according to claim 1 or 2, wherein there exists a cross-sectional plane of the optical device which includes an optical axis (22) of the signal light propagated through said light-transmitting means and which is such that the following applies:-
when a line segment which is formed when said first surface (70) of said filter member (20) and said cross-sectional plane cross each other is defined as a first line segment (80), a line segment which is formed when said second surface (72) of said filter member (20) and said cross-sectional plane cross each other is defined as a second line segment (82), a line segment which is formed when said first inner wall surface (74) of said slit (18) and said cross-sectional plane cross each other is defined as a third line segment (84), and a line segment which is formed when said second inner wall surface (76) of said slit (18) and said cross-sectional vertical plane cross each other is defined as a fourth line segment (86);
said third line segment (84) and said fourth line segment (86) incline in the same direction relative to a line that is perpendicular to the optical axis of the signal light entering the filter, and do not lie parallel to each other; and said third line segment (84) does not lie parallel to said first line segment (80).

4. An optical device according to claim 3, wherein said first line segment (80) and said second line segment (82) do not lie parallel to each other.

5. An optical device according to claim 3, wherein said first line segment (80) and said second line segment (82) lie parallel to each other.

6. An optical device according to any one of claims 1 to 5 comprising:
a plurality of light transmitting means (15); wherein
the slit (18) is defined commonly in said light transmitting means (15); and wherein
said filter member (20) has a curved surface (70) facing at least said slit (18).

## Patentansprüche

1. Optische Vorrichtung, die Folgendes umfasst:
Lichtübertragungsmittel (15);
einen Spalt (18), der in den Lichtübertragungsmitteln (15) definiert ist;
ein Filterelement (20), das in den Spalt (18) eingeführt ist, um einen Teil eines Signallichts (22), das sich durch die Lichtübertragungsmittel (15) ausbreitet, zu teilen; und
ein Harz (19), das einen Abstand zwischen dem Spalt (18) und dem Filterelement (20) in dem Spalt (18) ausfüllt;
wobei das Filterelement (20) ein Substrat (54) und einen optischen Dünnfilm (56) aufweist, der auf einer Hauptfläche des Substrats (54) angeordnet ist;
wobei, wenn eine Fläche des Filterelements (20) auf dem optischen Dünnfilm (56) als erste Fläche (70) definiert ist, eine Fläche des Filterelements (20) auf dem Substrat (54) als zweite Fläche (72) definiert ist, eine Innenwandfläche des Spalts (18), die der ersten Fläche (70) des Filterelements (20) zugewandt ist, als erste Innenwandfläche (74) definiert ist und eine Innenwandfläche des Spalts (18), die der zweiten Fläche (76) des Filterelements (20) zugewandt ist, als zweite Innenwandfläche (76) definiert ist;
wobei die erste Innenwandfläche (74) und die zweite Innenwandfläche (76) des Spalts (18) in Bezug auf eine Ebene, die im rechten Winkel auf die optische Achse des in den Filter eintretenden Signallichts steht, in dieselbe Richtung geneigt sind und nicht parallel zueinander sind; und zumindest die erste Innenwandfläche des Spalts nicht parallel zu der ersten Fläche (70) des Filterelements (20) ist.

2. Optische Vorrichtung nach Anspruch 1, worin ein zwischen den beiden Flächen, die nicht parallel zueinander sind, gebildeter Winkel 0,5° oder mehr beträgt.

3. Optische Vorrichtung nach Anspruch 1 oder 2, worin es eine Querschnittsebene der optischen Vorrichtung gibt, die eine optische Achse (22) des durch die Lichtübertragungsmittel verbreiteten Signallichts umfasst und so vorliegt, dass Folgendes gilt:
wenn ein Abschnitt einer Geraden, der gebildet wird, wenn die erste Fläche (70) des Filterelements (20) und die Querschnittsebene einander schneiden, als erster Geradenabschnitt (80) definiert ist, ist ein Geradenabschnitt, der gebildet wird, wenn die zweite Fläche (72) des Filterelements (20) und die Querschnittsebene einander schneiden, als zweiter Geradenabschnitt (82) definiert, ist ein Geradenabschnitt, der gebildet wird, wenn die erste Innenwandfläche (74) des Spalts (18) und die Querschnittsebene einander schneiden, als dritter Geradenabschnitt (84) definiert, und ist ein Geradenabschnitt, der gebildet wird, wenn die zweite Innenwandfläche (76) des Spalts (18) und die vertikale Querschnittsebene einander schneiden, als vierter Geradenabschnitt (86) definiert;
wobei der dritte Geradenabschnitt (84) und der vierte Geradenabschnitt (86) in Bezug auf eine Gerade, die im rechten Winkel auf die optische Achse des in den Filter eintretenden Lichts steht, in dieselbe Richtung geneigt sind und nicht parallel zueinander sind; und der dritte Geradenabschnitt (84) ist nicht parallel zu dem ersten Geradenabschnitt (80).

4. Optische Vorrichtung nach Anspruch 3, worin der erste Geradenabschnitt (80) und der zweite Geradenabschnitt (82) nicht parallel zueinander sind.

5. Optische Vorrichtung nach Anspruch 3, worin der erste Geradenabschnitt (80) und der zweite Geradenabschnitt (82) parallel zueinander sind.

6. Optische Vorrichtung nach einem der Ansprüche 1 bis 5, die Folgendes umfasst:
eine Vielzahl an Lichtübertragungsmitteln (15), wobei
der Spalt als ein gemeinsamer Spalt (18) in den Lichtübertragungsmitteln (15) definiert ist und
das Filterelement (20) eine gekrümmte Oberfläche (70) aufweist, die zumindest dem Spalt (18) zugewandt ist.

## Revendications

1. Dispositif optique comprenant:
un moyen de transmission de lumière (15);
une fente (18) définie dans ledit moyen de transmission de lumière (15);
un élément de filtre (20) inséré dans ladite fente (18) pour diviser une portion d'une lumière de signal (22) propagée à travers ledit moyen de transmission de lumière (15); et
une résine (19) remplissant un espace entre ladite fente (18) et ledit élément de filtre (20) dans ladite fente (18);
ledit élément de filtre (20) ayant un substrat (54) et un film optique mince (56) disposé sur une surface principale dudit substrat (54);
où lorsqu'une surface dudit élément de filtre (20) sur ledit film optique mince (56) est définie comme une première surface (70), une surface dudit élément de filtre (20) sur ledit substrat (54) est définie comme une seconde surface (72), une surface de paroi intérieure de ladite fente (18) orientée vers ladite première surface (70) dudit élément de filtre (20) est définie comme une première surface de paroi intérieure (74), et une surface de paroi intérieure de ladite fente (18) qui est orientée vers ladite seconde surface (76) dudit élément de filtre (20) est définie comme une seconde surface de paroi intérieure (76);
ladite première surface de paroi intérieure (74) et ladite seconde surface de paroi intérieure (76) de ladite fente (18) sont inclinées dans la même direction relativement à un plan qui est perpendiculaire à l'axe optique de la lumière du signal entrant dans le filtre et ne sont pas parallèles l'une à l'autre; et au moins ladite première surface de paroi intérieure de ladite fente n'est pas parallèle à ladite première surface (70) dudit élément de filtre (20).

2. Dispositif optique selon la revendication 1, dans lequel un angle formé entre lesdites deux surfaces qui ne sont pas parallèles l'une à l'autre est de 0,5° ou plus grand.

3. Dispositif optique selon la revendication 1 ou 2, dans lequel il existe un plan en section transversale du dispositif optique qui inclut un axe optique (22) de la lumière du signal propagée à travers ledit moyen de transmission de lumière et qui est tel que ce qui suit s'applique:
lorsqu'un segment de ligne qui est formé lorsque ladite première surface (70) dudit élément de filtre (20) et ledit plan en section transversale se croisent, est défini comme un premier segment de ligne (80), un segment de ligne qui est formé lorsque ladite seconde surface (72) dudit élément de filtre (20) et ledit plan en section transversale se croisent, est défini comme un second segment de ligne (82), un segment de ligne qui est formé lorsque ladite première surface de paroi intérieure (74) de ladite fente (18) et ledit plan en section transversale se croisent est défini comme un troisième segment de ligne (84), et un segment de ligne qui est formé lorsque ladite seconde surface de paroi intérieure (76) de ladite fente (18) et ledit plan vertical en section transversale se croisent, est défini comme un quatrième segment de ligne (86);
ledit troisième segment de ligne (84) et ledit quatrième segment de ligne (86) sont inclinés dans la même direction relativement à une ligne qui est perpendiculaire à l'axe optique de la lumière du signal entrant dans le filtre, et ne sont pas parallèles l'un à l'autre; et ledit troisième segment de ligne (84) n'est pas parallèle audit premier segment de ligne (80).

4. Dispositif optique selon la revendication 3, dans lequel ledit premier segment de ligne (80) et ledit deuxième segment de ligne (82) ne sont pas parallèles l'un à l'autre.

5. Dispositif optique selon la revendication 3, dans lequel ledit premier segment de ligne (80) et ledit deuxième segment de ligne (82) sont parallèles l'un à l'autre.

6. Dispositif optique selon l'une quelconque des revendications 1 à 5 comprenant:
une pluralité de moyens de transmission de lumière (15); où
la fente (18) est définie communément dans ledit moyen de transmission de lumière (15); et où
ledit élément de filtre (20) possède une surface courbée (70) orientée au moins vers ladite fente (18).
